# EUROPEAN PATENT SPECIFICATION

(11) **EP 4 360 917 B1**
(45) Date of publication and mention of the grant of the patent: **08.10.2025**
(21) Application number: 23205870.1
(22) Date of filing: 25.10.2023
(51) Int. Cl.: B60C 23/04, B64C 25/00, B64C 25/32

(54) **A TIRE MONITORING DEVICE**
REIFENÜBERWACHUNGSVORRICHTUNG
DISPOSITIF DE SURVEILLANCE DE PNEU

(30) Priority: 27.10.2022 GB 202215915
(43) Date of publication of application: 01.05.2024
(73) Proprietor: Airbus Operations Limited, Bristol BS34 7PA (GB)
(72) Inventor: BILL, Andrew, Bristol, BS34 7PA (GB); BLACK, Sukhpreet, Bristol, BS34 7PA (GB)
(74) Representative: EIP

(56) References cited:
- EP-B1- 3 642 056
- CN-A- 110 203 023
- US-A1- 2017 326 927
- US-A1- 2021 075 246
- US-B2- 10 935 466
- US-B2- 9 950 701

## Description

### TECHNICAL FIELD

The present invention relates to a tire monitoring device, an aircraft landing gear comprising a tire monitoring device, and an aircraft comprising an aircraft landing gear.

### BACKGROUND

Checking tire pressure is an important part of the maintenance of a vehicle. Tire pressures should be maintained at predetermined pressures to ensure that a tire performs as intended by the manufacturer. Incorrect tire pressure can lead to a tire failing, perhaps bursting and causing damage to the vehicle and/or a loss of control.

CN 110203023 A discloses a wheel state monitoring system for a motor vehicle with self-generating electricity comprising a wheel state monitoring unit, a central control unit and a remote monitoring unit connected in sequence.

US 2021/075246 A1 discloses apparatus that includes a flexible adhesive tape node attached to a rotatable component and comprising an energy harvester component, a processor, a memory, a rechargeable energy source, and a wireless transmitter; wherein rotation of the rotatable component generates an electric current in the energy harvester component that powers a rechargeable energy source.

US 10935466 B2 discloses an integrated tire sensor and reader system which includes at least one sensor unit mounted a tire or a wheel. A reader is disposed remotely from the sensor unit. The sensor unit includes at least one sensor for measuring a parameter of the tire or wheel and an antenna for communicating with the reader.

US 9950701 B2 discloses a tire pressure sensor for use in a wheel of aircraft landing gear. The tire pressure sensor includes a position sensor configured to detect a movement of the wheel and generate a wheel movement signal based on the movement.

### SUMMARY

An unclaimed aspect of the present invention provides a tire monitoring device comprising: a pressure sensor for sensing an internal pressure of a tire of an aircraft wheel; an accelerometer for sensing an acceleration of the tire monitoring device; a gyroscope for sensing an angular velocity of the tire monitoring device; and a wireless communication interface for wirelessly communicating a signal based on at least one of a sensed internal pressure sensed by the pressure sensor, a sensed acceleration sensed by the accelerometer, and a sensed angular velocity sensed by the gyroscope.

By providing a tire monitoring device that comprises each of a pressure sensor, an accelerometer, and a gyroscope, increased analytic capabilities may be obtained relative to, for example, a tire monitoring device comprising only a subset of such sensors. Use of a wireless communication interface to communicate the signal based on at least one of a sensed internal pressure sensed by the pressure sensor, a sensed acceleration sensed by the accelerometer, and a sensed angular velocity sensed by the gyroscope may enable increased analytic capabilities without requiring the tire monitoring device to interface with complex vehicle systems, such as complex avionics systems on an aircraft.

Optionally, the pressure sensor, the accelerometer, the gyroscope, and the wireless communication interface, are disposed in common housing. Optionally, the common housing is for installation on an aircraft wheel.

Optionally, the gyroscope comprises a vibrating structure gyroscope. Optionally, the gyroscope comprises a micro-electro-mechanical systems gyroscope.

Optionally, the tire monitoring device comprises a mounting mechanism for mounting the tire monitoring device to an aircraft wheel such that a position of the tire pressure monitoring device is fixed relative to the aircraft wheel. Optionally the mounting mechanism comprises a mounting mechanism for engaging with a tire monitoring device holder that is releasably connectable to an aircraft wheel. Optionally the mounting mechanism comprises a hollow cylindrical member comprising an internal screw thread.

Optionally, the tire monitoring device comprises a memory for storing the at least one of the sensed internal pressure, the sensed acceleration, and the sensed angular velocity.

Optionally, the tire monitoring device is configured to store the at least one of the sensed internal pressure, the sensed acceleration, and the sensed angular velocity, alongside a corresponding timestamp in the memory.

Optionally, the tire monitoring device comprises a time source, and the timestamp is derived based on a reading of the time source.

Optionally, the tire monitoring device is configured to transmit, in response to a request from a remote device and via the wireless communication interface, a signal based on the at least one of the sensed internal pressure, the sensed acceleration, and the sensed angular velocity, to the remote device.

Optionally, the signal comprises data corresponding to the at least one of the sensed internal pressure, the sensed acceleration, and the sensed angular velocity. Optionally, the signal comprises data corresponding to the timestamp of the at least one of the sensed internal pressure, the sensed acceleration, and the sensed angular velocity.

A first aspect of the present invention provides an aircraft landing gear comprising a tire monitoring device and a wheel to which the tire monitoring device is mounted, wherein the tire monitoring device comprises: a pressure sensor for sensing an internal pressure of a tire of the wheel; an accelerometer for sensing an acceleration of the tire monitoring device; a gyroscope for sensing an angular velocity of the tire monitoring device; and a wireless communication interface for wirelessly communicating a signal based on at least one of a sensed internal pressure sensed by the pressure sensor, a sensed acceleration sensed by the accelerometer, and a sensed angular velocity sensed by the gyroscope, and a wheel to which the tire monitoring device is mounted.

Optionally, the tire monitoring device comprises a controller configured to determine, based on at least one of a sensed acceleration sensed by the accelerometer and a sensed angular velocity sensed by the gyroscope, a position of the aircraft landing gear.

Optionally the controller is configured to determine, based on at least one of a sensed acceleration sensed by the accelerometer and a sensed angular velocity sensed by the gyroscope, whether the aircraft landing gear is in a retracted position or an extended position.

Optionally, the controller is configured to control the tire monitoring device based on the determined position of the aircraft landing gear.

Optionally, the controller is configured to control a frequency at which the pressure sensor obtains a pressure measurement based on the determined position of the aircraft landing gear. Optionally, the controller is configured to control the pressure sensor to obtain a pressure measurement at a greater frequency when the landing gear is extended compared to when the landing gear is retracted.

Optionally, the controller is configured to control the tire monitoring device to operate in a reduced functionality mode when the landing gear is retracted, for example with one or more components non-operational or operating with reduced power consumption in the reduced functionality mode when compared with a normal operating mode. Optionally, the controller is configured to control the wireless communication interface based on the determined position of the landing gear. Optionally, the controller is configured to turn-off the wireless communication interface when the landing gear is retracted.

Optionally, the tire monitoring device is configured to store the determined position of the landing gear in the memory, for example alongside a corresponding one of the at least one of the sensed internal pressure, the sensed acceleration, and the sensed angular velocity. Optionally, the tire monitoring device is configured to transmit, in response to a request from the remote device and via the wireless communication interface, a signal based on the determined position of the landing gear. Optionally, the signal comprises data corresponding to the determined position of the landing gear.

Optionally, the tire monitoring device comprises a controller configured to determine, based on the at least one of the sensed internal pressure, the sensed acceleration and the sensed angular velocity, a speed of the wheel to which the tire monitoring device is mounted.

Optionally, the controller is configured to determine, based on the at least one of the sensed internal pressure, the sensed acceleration and the sensed angular velocity, whether the wheel is in motion or stationary.

Optionally, the controller is configured to control the tire monitoring device based on the determined speed of the wheel.

Optionally, the controller is configured to control a frequency at which the pressure sensor obtains a pressure measurement based on the determined speed of the wheel. Optionally, the controller is configured to control the pressure sensor to obtain a pressure measurement at a lower frequency when the speed of the wheel is above a threshold value. Optionally, the threshold value is Om/s.

Optionally, the controller is configured to control the tire monitoring device to operate in a reduced functionality mode when the speed of the wheel is above the threshold value, for example with one or more components non-operational or operating with reduced power consumption in the reduced functionality mode when compared with a normal operating mode. Optionally, the controller is configured to control the wireless communication interface based on the determined speed of the wheel. Optionally, the controller is configured to turn-off the wireless communication interface when the speed of the wheel is above the threshold value.

Optionally, the tire monitoring device is configured to store the determined speed of the wheel in the memory, for example alongside a corresponding one of the at least one of the sensed internal pressure, the sensed acceleration, and the sensed angular velocity. Optionally, the tire monitoring device is configured to transmit, in response to a request from the remote device and via the wireless communication interface, a signal based on the determined speed of the wheel. Optionally, the signal comprises data corresponding to the determined speed of the wheel.

A second aspect of the present invention provides an aircraft comprising an aircraft landing gear according to the first aspect of the present invention.

Optionally, the tire monitoring device comprises a controller configured to determine, based on at the least one of the sensed internal pressure, the sensed acceleration and the sensed angular velocity, whether the aircraft is in-flight.

Optionally, the controller is configured to control the tire monitoring device based on whether the aircraft is determined to be in-flight.

Optionally, the controller is configured to control a frequency at which the pressure sensor obtains a pressure measurement based on whether the aircraft is determined to be in-flight. Optionally, the controller is configured to control the pressure sensor to obtain a pressure measurement at a greater frequency when the aircraft is determined to be on-ground compared to when the aircraft is determined to be in-flight.

Optionally, the controller is configured to control the tire monitoring device to operate in a reduced functionality mode when the aircraft is in-flight, for example with one or more components non-operational or operating with reduced power consumption in the reduced functionality mode when compared with a normal operating mode. Optionally, the controller is configured to control the wireless communication interface based on whether the aircraft is determined to be in-flight. Optionally, the controller is configured to turn-off the wireless communication interface when the aircraft is determined to be in-flight.

Optionally, the tire monitoring device is configured to store an indication as to whether the aircraft is in flight in the memory, for example alongside a corresponding one of the at least one of the sensed internal pressure, the sensed acceleration, and the sensed angular velocity. Optionally, the tire monitoring device is configured to transmit, in response to a request from the remote device and via the wireless communication interface, a signal based on the determination as to whether the aircraft is in-flight. Optionally, the signal comprises data corresponding to the determination as to whether the aircraft is in-flight.

A third aspect of the present invention provides a tire monitoring system comprising an aircraft according to the second aspect of the present invention, and a processing system configured to obtain the at least one of the sensed internal pressure, the sensed acceleration, and the sensed angular velocity from the tire monitoring device.

Optionally, the processing system comprises a remote processing system located remotely from the aircraft, for example at one or more maintenance centres remote from the aircraft. Optionally the remote processing system is configured to obtain the at least one of the sensed internal pressure, the sensed acceleration, and the sensed angular velocity from the tire monitoring device via the remote device. For example, the remote device may be configured to obtain, via the wireless communication interface, the at least one of the sensed internal pressure, the sensed acceleration, and the sensed angular velocity from the tire monitoring device, and the remote processing system may be configured to obtain, via wireless or wired communication, the at least one of the sensed internal pressure, the sensed acceleration, and the sensed angular velocity from the remote device.

Optionally, the remote processing system may be configured to obtain any of the determined position of the aircraft landing gear, the determined speed of the wheel, and the determination as to whether the aircraft is in-flight, from the tire monitoring device, for example via the remote device.

Optionally, the processing system may be configured to determine, based on the at least one of the sensed internal pressure, the sensed acceleration, and the sensed angular velocity, an altered operational mode of a component of the aircraft landing gear. Optionally, an altered operational mode comprises an operational mode in which performance of the component of the aircraft landing gear is reduced relative to a normal operational mode.

Optionally, the landing gear comprises an axle, and a bearing assembly, the wheel is mounted to the axle by the bearing assembly, and the processing system is configured to determine, based on the at least one of the sensed internal pressure, the sensed acceleration, and the sensed angular velocity, an altered operational mode of the bearing assembly. Optionally, the processing system is configured to determine, based on a combination of sensed acceleration or sensed angular velocity with a corresponding timestamp, an altered operational mode of the bearing assembly. For example, the sensed acceleration or sensed angular velocity combined with the timestamp may define a vibration profile of the bearing assembly, and such a vibration profile may be utilised to determine an altered operational mode of the bearing assembly where excessive and/or abnormal vibrations are present. Optionally, the processing system is configured to determine an altered operational mode of the bearing assembly when the wheel is free to rotate, for example when no external forces are applied to the wheel.

Optionally, the aircraft landing gear comprises a brake assembly for applying a braking force to the wheel, and the processing system is configured to determine, based on the at least one of the sensed internal pressure, the sensed acceleration, and the sensed angular velocity, an altered operational mode of the brake assembly. Optionally, the processing system is configured to determine, based on a combination of sensed acceleration or sensed angular velocity with a corresponding timestamp, an altered operational mode of the brake assembly. For example, the sensed acceleration or sensed angular velocity combined with the timestamp may define a vibration profile of the brake assembly, and such a vibration profile may be utilised to determine an altered operational mode of the brake assembly where excessive and/or abnormal vibrations are present.

Optionally, the processing system is configured to determine, based on the at least one of the sensed internal pressure, the sensed acceleration, and the sensed angular velocity, whilst a braking force is applied to the wheel by the brake assembly, an altered operational mode of the brake assembly. Optionally, the processing system is configured to determine, based on the at least one of the sensed internal pressure, the sensed acceleration, and the sensed angular velocity, whilst a braking force is applied to the wheel by the brake assembly during retraction of the landing gear, an altered operational mode of the brake assembly.

Optionally, the landing gear comprises an axle and a further wheel, the wheel and the further wheel are mounted to the axle, and the processing system is configured to determine, based on the at least one of the sensed internal pressure, the sensed acceleration, and the sensed angular velocity, an altered operational mode of at least one of the wheel and the further wheel. Optionally, the processing system is configured to determine, based on a combination of sensed acceleration or sensed angular velocity with a corresponding timestamp, an altered operational mode of the at least one of the wheel and the further wheel. For example, the sensed acceleration or sensed angular velocity combined with the timestamp may define a vibration profile of the at least one of the wheel and the further wheel, and such a vibration profile may be utilised to determine an altered operational mode of the at least one of the wheel and the further wheel where excessive and/or abnormal vibrations are present.

Optionally, an altered operational mode of the at least one of the wheel and the further wheel comprises any of a reduced mass of the at least one of the wheel and the further wheel, a reduced tread depth of the at least one of the wheel and the further wheel, and a pressure differential between the wheel and the further wheel.

A an unclaimed aspect of the present invention provides a method of monitoring an aircraft landing gear, the method comprising sensing, at a tire monitoring device mounted to the aircraft landing gear, an angular velocity of the tire monitoring device, and determining, based on the sensed angular velocity of the tire monitoring device, an altered operational mode of a component of the aircraft landing gear.

Optionally, the tire monitoring device is mounted to a wheel of the aircraft landing gear. Optionally, sensing the angular velocity of the tire monitoring device comprises utilising a gyroscope that forms part of the tire monitoring device.

An unclaimed aspect of the present invention provides aircraft comprising: a landing gear; and a tire monitoring device mounted to the landing gear; wherein the tire monitoring device comprises a gyroscope configured to sense an angular velocity of the tire monitoring device, a controller configured to determine, based on the sensed angular velocity, a position of the landing gear, and a wireless communication interface configured to transmit a signal, based on the determined position of the landing gear, to a remote device.

An unclaimed aspect of the present invention provides a tire monitoring system comprising: an aircraft comprising: an aircraft landing gear having a wheel, and a brake assembly for applying a braking force to the wheel; and a tire monitoring device mounted to the wheel, wherein the tire monitoring device comprises a gyroscope configured to sense, whilst a braking force is applied to the wheel during retraction of the aircraft landing gear, an angular velocity of the tire monitoring device; and a processing system remote from the aircraft, the processing system configured to determine, based on the sensed angular velocity, an altered operational mode of the brake assembly.

Optional features of aspects of the present invention may be equally applied to other aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft tire monitoring device;
Figure 2 shows a schematic view of a remote device;
Figure 3 shows a schematic view of an aircraft;
Figure 4 shows a schematic view of an aircraft landing gear;
Figure 5 shows a first schematic view of a tire performance monitoring system;
Figure 6 shows a first method according to an example; and
Figure 7 shows a second method according to an example.

### DETAILED DESCRIPTION

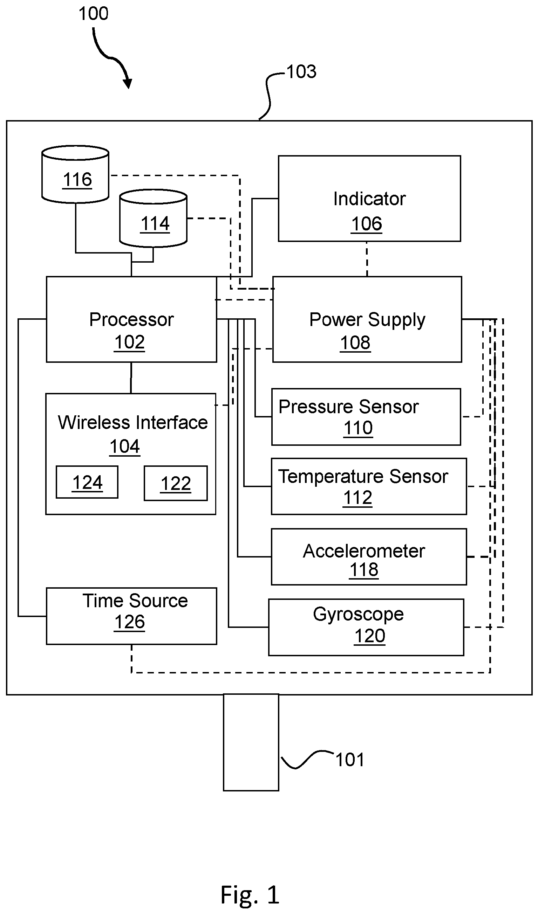

An aircraft tire monitoring device 100 in accordance with an example of the present invention is illustrated schematically in Figure 1, in the form of a tire pressure monitoring device. The tire monitoring device 100 is configured for mounting on a wheel, and has a mounting mechanism 101 that enables the tire monitoring device 100 to be mounted to an aircraft wheel, for example via the use of a tire pressure monitoring device holder (not shown) that acts as a mounting mechanism for mounting the tire pressure monitoring device to the aircraft wheel. Here the mounting mechanism 101 comprises a screw thread to enable the tire monitoring device 100 to be connected to the tire pressure monitoring device holder, such that the tire monitoring device 100 is fixed relative to the wheel. The tire monitoring device 100 has a housing 103 within which are located a processor 102, a wireless communication interface 104, an indicator 106, a power supply 108, a pressure sensor 110, a temperature sensor 112, a first storage 114, a second storage 116, an accelerometer 118, a gyroscope 120, and a time source 126.

The processor 102 may be any suitable processing device including a microprocessor with one or more processing cores. In use, processor 102 coordinates and controls the other components and may be operative to read and/or write computer program instructions and data from/to the storage 114, 116. The processor 102 may be optimized for low power operation or have at least one processing core optimized for low power operation in some examples. Further details of operations of the processor 102 are described hereinafter.

The wireless communication interface 104 is connected to the processor 102 and is used to both transmit and receive data from the other devices of a tire pressure sensor system. In this example, the wireless communication interface 104 includes two transceivers, 122, 124 which both use different wireless technology from one another. A first transceiver 122 is provided for relatively long-range communication, up to about 50m or about 100m. For example, the first transceiver 122 may use a communication standard suitable for mobile devices, such as IEEE 802.15.1, IEEE 802.15.4, IEEE 802.11 (Wi-Fi) on either the 2.4 GHz or 5 GHz Industrial Scientific and Medical (ISM) bands or a Wireless Avionics Intra-Communications (WAIC) standard. The first transceiver 122 also includes an encryption module for encrypting sent data and decrypting received data, for example according to the Advanced Encryption Standard (AES) utilizing pre-shared keys. A second transceiver 124 is provided for relatively short-range communications. For example, the second transceiver 124 may use a standard according to IEEE 802.15, such as IEEE 802.15.4, RFID or Near Field Communication (NFC). The second transceiver 124 may operate over a range of less than 5m, less than 3m, less than 1m, less than 50 cm, less than 25 cm, less than 10 cm, less than 5cm, less than 1cm or requiring contact between devices. Like the first transceiver 122, the second transceiver 124 also includes an encryption module for encrypting sent data and decrypting received data.

In some examples, a single wireless transceiver may be provided in the wireless communication interface 104. In that case the single transceiver may use relatively short range or relatively long range communication, or adjust the range (such as by controlling transmit power) as required.

The indicator 106 is connected to the processor 102 and controlled by the processor 102 to provide indications to a user of the tire monitoring device 100. In this example the indicator 106 is an LED, but in other examples the indicator is another form of light, a display, such as an LCD or e-ink display, or any other form of visual indication. In other examples, the indicator 106 is an audible indicator, such as a buzzer, beeper, speaker or any other sound generating component. In further examples, the indicator 106 can comprise both audible and visual indication components. The indicator 106 provides at least first and second indications, for example a first colour and a second colour of emitted light. Further indications can also be provided, such as solid or flashing light. The tire monitoring device 100 has a housing 103 and the indicator 106 can provide an indication outside the housing, for example the LED may be mounted external to the housing or visible through the housing, or sound may be able to be emitted from within the housing.

The power supply 108 provides power to the elements of the tire monitoring device 100. The power supply 108 may be a battery, such as Lithium battery. In this example, the power supply 108 is a Lithium battery with power sufficient to run the sensor in normal operation for about 2 to 3 years. In other examples the power supply 108 may comprise a power harvesting system, for example harvesting vibration and/or electromagnetic radiation to charge a capacitor or battery which is then used to power the device.

The pressure sensor 110 is connected to processor 102 and may be any suitable sensor for measuring pressure, for example a capacitive sensor. Similarly, the temperature sensor 112 is connected to processor 102 and may be any suitable sensor for measuring temperature, such as thermocouple. The temperature sensor 112 may be arranged to measure the temperature of the wheel or the temperature of the gas inside the tire directly. Where the temperature sensor 112 measures the temperature of the wheel, this can be processed to determine the temperature of the gas in the tire. For example, an algorithm or look-up table may be used. Including both a pressure sensor 110 and a temperature sensor 112 may be useful to determine a temperature compensated pressure value.

This example includes two storage elements 114 and 116, which can individually or collectively be referred to as local memory of the aircraft tire monitoring device 100. Storage 114 is non-volatile rewritable storage in this example, such as flash memory which can retain data without requiring applied power. Other examples may include volatile storage, which is kept powered by the power supply, or combinations of read-only and rewritable storage. Storage 114 is connected to the processor 102 and used to store both computer program instructions for execution by the processor and data, such as data from the pressure sensor 110 or received over the wireless communication interface 104. In some examples, storage 114 may store a history of pressure and/or temperature readings sensed by the pressure sensor 110 and the temperature sensor 112. For example, the previous ten days readings may be stored, with the newest data replacing the oldest once the storage is full.

Storage 116 is secure storage to which write and/or read access is restricted, for example only accessible to certain processes running on processor 102. Configuration data, such as wireless encryption keys can be stored in storage 116. In other examples, a single storage may be provided, or storage 114 and 116 may be provided in a single physical device with a logical partitioning between storage 114 and storage 116.

The accelerometer 118 is connected to processor 102 and may be any suitable accelerometer for measuring linear acceleration of the tire monitoring device. The accelerometer 118 is a multi-axis accelerometer. The gyroscope 120 is also connected to the processor 120, and comprises a micro-electro-mechanical systems gyroscope capable of sensing angular velocity of the tire monitoring device 100. The gyroscope is a multi-axis gyroscope. Collectively the accelerometer 118 and the gyroscope 120 can be referred to as an inertial measurement unit (IMU). In some examples plural accelerometers and gyroscopes may be used, for example with one accelerometer and one gyroscope per axis.

The connection of the pressure sensor 110, temperature sensor 112, accelerometer 118 and gyroscope 120 to the processor 102 may be digital, providing a digital representation of the sensed parameters from an Analogue to Digital Convertor (ADC) in the sensor itself, or analogue, in which case the processor may include an ADC to sample the received signal.

The time source 126 comprises a counter or a real time clock. The time source 126 provides a value indicative of current time for indicating the time at which a measurement was taken. For example the processor 100 may cause a current value of the time source 126 to be associated with each pressure, temperature, acceleration, and angular velocity measurement when it is stored in the storage 116 for use as a timestamp.

A timestamp may be an indication of real time (such as Coordinated Universal Time, UTC). A timestamp may also be a relative measurement, such as a counter value where the counter is initialized at a point in the use of the tire monitoring device 100, such as when the tire monitoring device 100 is first put into service. Where relative timestamps are used, they may be converted to a real time by noting the value of the timestamp for a known time and considering the interval at which the counter is incremented.

It is not required for the time source 126 to be synchronized with other tire monitoring devices on the same aircraft because the methods using historical data described herein can be applied to the data of each monitoring device independently. When data of more than one tire monitoring device is required to be viewed on a common timeline timestamps can be converted to a common reference timeline. For example the current time when a mandated tire pressure measurement takes place may be recorded along with a corresponding value of the timestamp and used to convert.

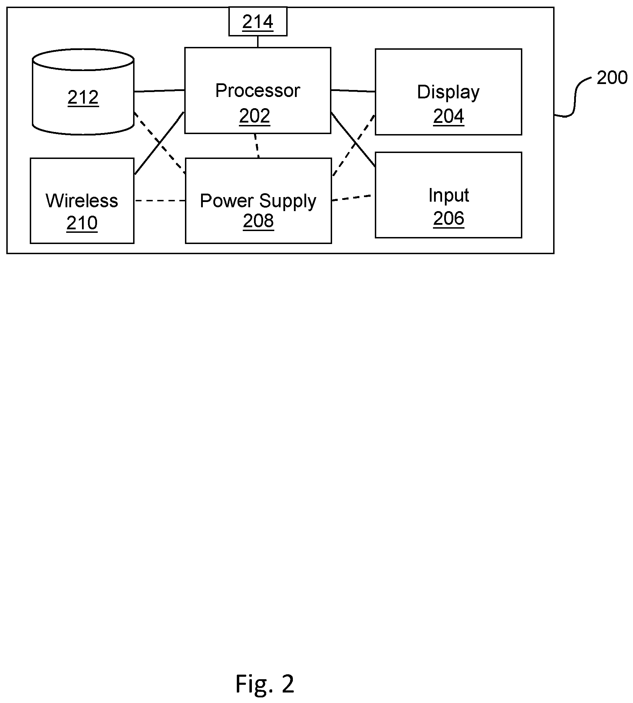

Figure 2 shows a schematic representation of a remote device 200 for use in conjunction with the tire monitoring device 100 of Figure 1. The remote device 200 includes a processor 202, a display 204, an input system 206, a power supply 208, a wireless communication interface 210, a storage 212 and wired communication interface 214. In this example the remote device 200 is a mobile device, such as a cellular phone or a tablet computer.

The processor 202 is any suitable processing device, for example a multipurpose microprocessor, system-on-chip, or system in package, which may include one or more processing cores. Processor 202 is connected to the display 204, such an LCD, OLED or e-ink display to display information to a user of the remote device 200.

Input system 206 includes a touch screen interface in this example, allowing a user to interact with the remote device 200 by touching user interface elements on the screen. The input system 206 may include one or more buttons in addition to the touch screen, as well as other input devices, such as a microphone for speech recognition and a camera for image input. Other examples may not include a touch screen interface.

The remote device is powered by power supply 208, which is a rechargeable lithium-ion battery in this example. Other examples may use alternative power supplies, such as other battery technologies, mains power, or energy harvesting, such as solar power.

A wireless interface 210 is included for the remote device 200 to communicate with other devices, such as the tire monitoring device 100. In this example, a single wireless interface 210 is provided which is configured to communicate with the tire monitoring device 100. For example, a relatively long-range wireless communication technology can be used, such as one conforming to IEEE 802.15.1, IEEE 802.15.4 or IEEE 802.11. This allows the remote device 200 to interact with the tire monitoring device 100 from a relatively long range.

In other examples, the remote device 200 may be provided with multiple wireless communication interfaces or transceivers, operating with different wireless technologies, such as at least two of IEEE 802.15.1, IEEE 802.15.4, IEEE 802.11 (Wi-Fi), WAIC, RFID and NFC. For example, the remote device 200 may have two transceivers with one having a longer communication range than the other.

Storage 212 includes a non-volatile element, such as flash memory, and a volatile element, such as RAM. The non-volatile element is used to store operating system software and application software. In this example, the remote device 200 runs standard operating system software and is loaded with application software to interact with the tire monitoring device 100. In order to restrict access to the tire monitoring device 100, the application software may be provided from a secure source and not available to the general public, and/or require credentials to be entered before operating.

Wired communication interface 214 is provided for connection to a computing system. The wired communication interface 214 can be for example, a serial data connection, such as Universal Serial Bus (USB), a parallel data connection or a network connection, such as Ethernet. The wired communication interface 214 may allow the remote device 200 to communicate values and/or other status information read from the tire monitoring device 100 to a computing system, for example to store long term trends and assist fleet management. Alternatively, or additionally, wired communication interface 214 may be used for communication with the computing system. In some examples, the remote device 200 may not include a wireless communication interface.

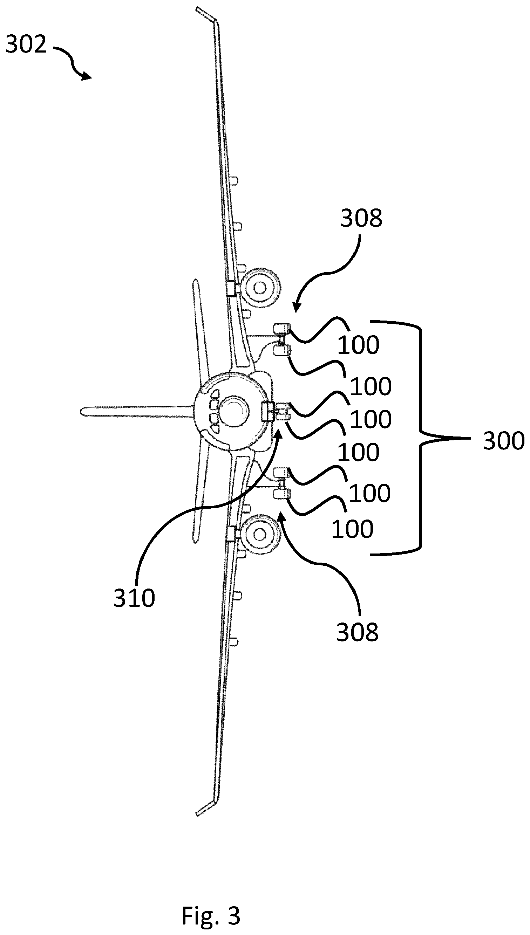

Figure 3 shows a schematic representation of a tire pressure sensor network 300 comprising a plurality of tire monitoring devices 100 installed in an aircraft 302. The aircraft 302 comprises main landing gear 308 and nose landing gear 310. The aircraft 302 may be used in conjunction with any of the methods described herein. Tire monitoring devices 100 are installed on respective wheels of the main landing gear 308 and nose landing gear 310.

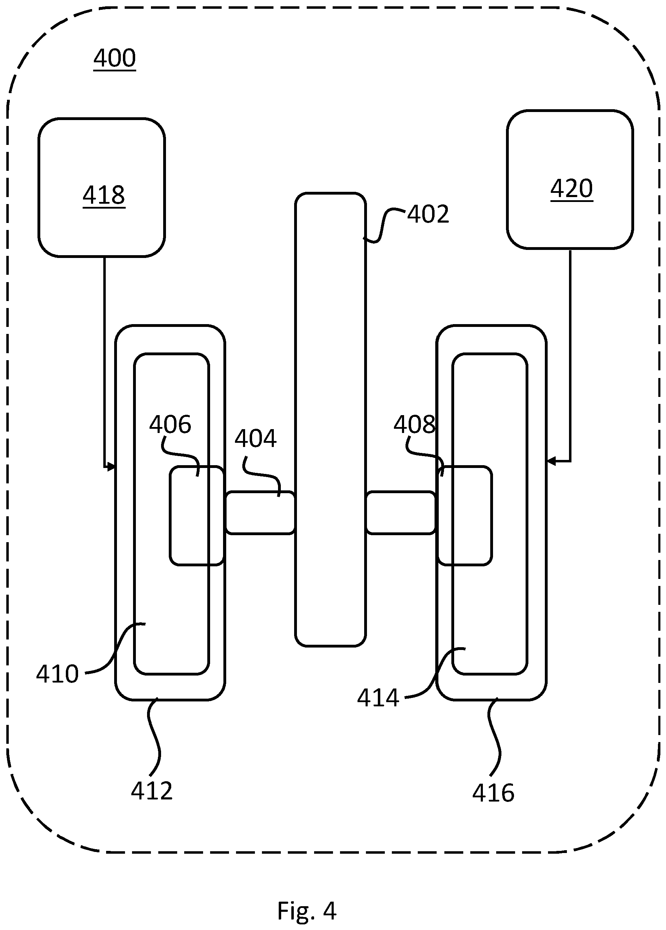

An illustrative landing gear 400, which may form one of the main landing gear 308 or the nose landing gear 310, is shown in Figure 4. The landing gear 400 comprises a strut 402, an axle 404, a first bearing assembly 406, a second bearing assembly 408, a first wheel 410 having a first tire 412, a second wheel 414 having a second tire 416, a first braking assembly 418, and a second braking assembly 420.

The strut 402 is retractably mounted to the aircraft 302 in use. The axle 404 is located at a lower end of the strut 402 and the first wheel 410 and the second wheel 414 are mounted to the axle 404 by the respective first 406 and second 408 bearing assemblies. Further details of the first 406 and second 408 bearing assemblies are not pertinent, and so are not provided here for sake of brevity. The first 418 and second 420 braking assemblies are configured to apply a braking force to the respective first 410 and second 414 wheels. The first 418 and second 420 braking assemblies can comprise hydraulic or electric braking assemblies formed of a plurality of sub-components. Further details of the first 418 and second 420 braking assemblies are not pertinent, and so are not provided here for sake of brevity.

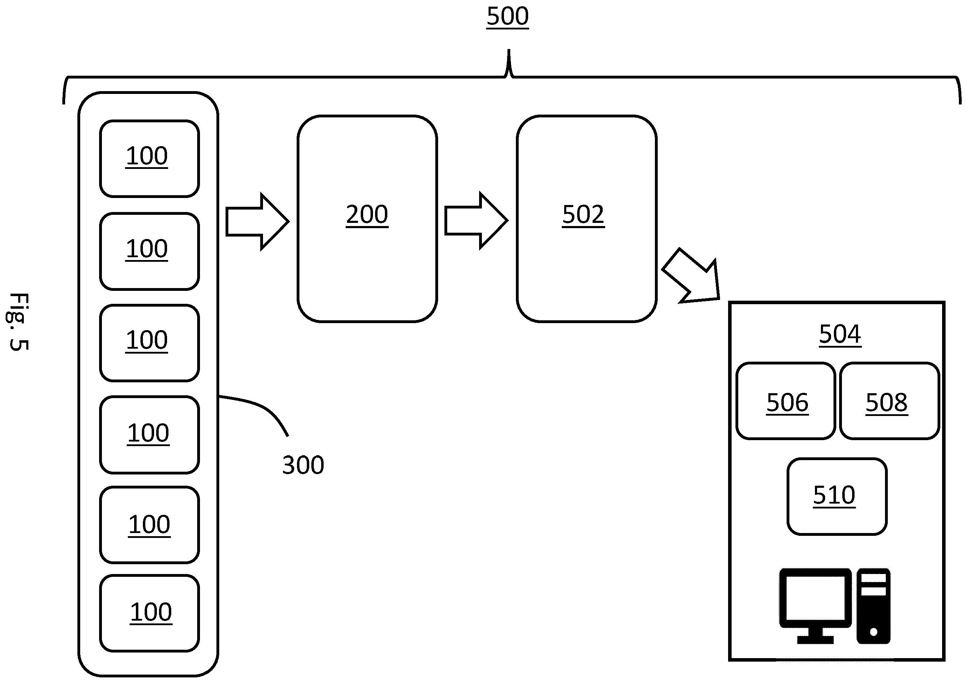

A tire monitoring system 500 that utilises the tire pressure sensor network 300 is illustrated schematically in Figure 5, and comprises the tire pressure sensor network 300, formed of a plurality of tire monitoring devices 100, the remote device 200, a remote memory 502, and a remote computing device 504.

The remote memory 502 is disposed remotely from the tire pressure sensor network 300, and hence the plurality of aircraft tire monitoring devices 100, and the remote device 200, and comprises any memory device capable of storing data associated with the tire pressure sensor networks 300. In some examples the remote memory 502 can comprise a database or the like, for example hosted on a server remote from the tire pressure sensor network 300, and hence the plurality of aircraft tire monitoring devices 100, and the remote device 200. Although illustrated separately in Figure 5, it will be appreciated that in some examples the remote memory 502 can comprise part of the remote computing device 504. Similarly, whilst one memory is illustrated, it will be appreciated that in practice the memory may comprise multiple memory devices, for example distributed across physical and/or virtual locations.

The remote computing device 504 is disposed remotely from the tire pressure sensor network 300, and hence the plurality of aircraft tire monitoring devices 100, and the remote device 200. The remote computing device 504 comprises a processor 506, a display device 508 and a memory 510. Whilst illustrated as a single processor 506, the remote computing device 504 may comprise more than one processor in practice, and similarly the system can additionally or alternatively comprise a plurality of remote computing devices 504 such as a server farm. The display device 508 can comprise a screen capable of displaying a graphical user interface to a user of the remote computing device 504, as will be discussed in more detail hereafter. The memory 510 can comprise any suitable memory device, and stores instructions that, when executed, control the processor 506 to perform various actions.

The tire monitoring system 500 can be utilised to process and/or analyse data obtained from the tire pressure sensor network 300 to provide further detail about operational modes of components of the landing gear 400, as will be described in more detail hereafter.

In particular, for the aircraft 302 each of the respective aircraft tire monitoring devices 100 is configured to wake-up every 10 minutes to measure pressure and temperature values using the respective pressure sensor 110 and temperature sensor 112. Other time intervals are also envisaged, and the wake-up interval can vary depending on a flight phase of the aircraft 302. Such measured pressure and temperature values are stored in the respective first storage 114 of the aircraft tire monitoring device 100, i.e. in local memory of the aircraft tire monitoring device 100. When a tire pressure check is performed, for example once the aircraft tire monitoring devices 100 are connected to the remote device 200 following an appropriate request or command in accordance with a method that will be described below, the remote device 200 obtains the measured pressure and temperature values from the first storage 114 of the respective aircraft tire monitoring devices 100.

The remote device 200 sends the measured pressure and temperature values, or appropriate values derived from the measured pressure and temperature values, to be stored in the remote memory 502. Such stored values are retrieved by the remote computing device 504, and are processed by the processor 506 of the remote computing device 504. This process occurs can a number of aircraft 302, for example for a fleet of aircraft operated by an operator, with the remote computing device 504, and in particular the display device 508, utilised to communicate information about the fleet of aircraft to the operator.

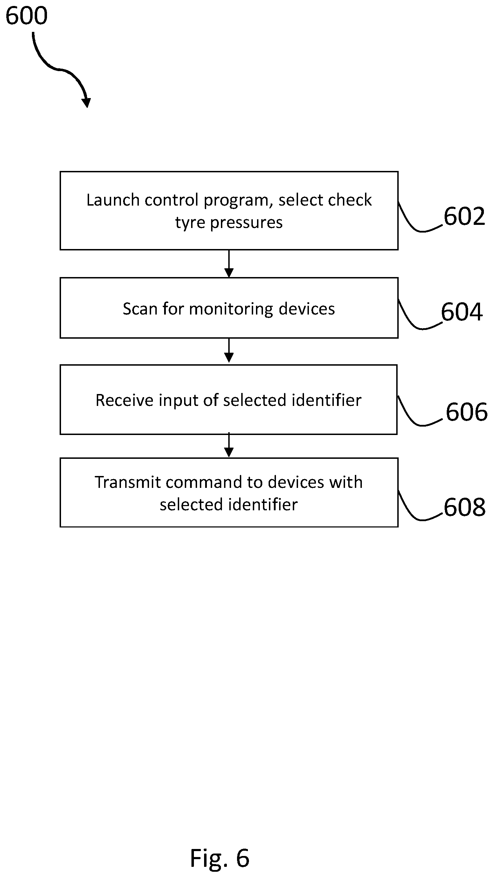

Figure 6 shows a flow chart of a tire pressure check process that can be used with the tire pressure sensor network 300 of Figure 3. First, at block 602, a user launches the tire monitoring control application on the remote device 12. During initialization of the application, a check is made that the wireless communication interface 210 for communication with the tire monitoring devices 100 is active on the remote device 200 and the user is prompted to activate if it is not active.

An operator typically launches the tire monitoring application on the remote device 12 periodically to perform a tire pressure check, for example every day, three days, or ten days. The operator may additionally, or alternatively, launch the tire monitoring application in response to occurrence of a particular event where it is desired to receive data from the accelerometer 118 and/or the gyroscope 120, for example in response to a hard landing event or an off-runway towing issue.

Next, at block 604, the remote device 200 scans for tire monitoring devices 100 in range. For example, the remote device 200 may send out a probe over the wireless communication interface 210. At the same time, the tire monitoring devices 100 are periodically waking and listening for the probe of the remote device, and/or periodically waking and broadcasting respective identification signals, which include aircraft identifiers, such as a tail identifier of an aircraft to which the tire monitoring device 100 is attached.

The scanning may comprise establishing direct, point-to-point contact with each tire monitoring device 100, or contact through the network 300 of tire monitoring devices 100, for example through an access point, a master device, or any device in a mesh network.

Depending on the communication range and location, tire monitoring devices associated with more than one aircraft may be detected. For example, several aircraft may be in the same hanger in range of the remote device 200. At block 606, input is received of a selected identifier.

Next, at block 608, a request or command is sent to the tire monitoring devices 100 corresponding to the selected identifier to cause them to connect to the remote device 200, for example so that they can receive a request from the remote device 200 to carry out a tire pressure check.

Throughout the process of Figure 6, communication between the remote device 200 and the tire monitoring devices 100 may be secure, for example encrypted by a network key. The network key for the communication with the remote device may be different from the network key used for communication between the sensor devices to enhance the security of the system.

Security may be increased by using a wireless communication technology with a limited transmission distance when exchanging secure keys, for example 802.11 (Wi-Fi) standards may allow transmission over a distance of 50m or further in clear space. This alone may be sufficient to provide increased security because physical proximity is required to intercept communications. In some examples, security may be increased by reducing transmission power when encryption keys are transmitted compared to transmission of the encrypted data itself, requiring closer proximity for the initial key exchange process.

Measured pressure, temperature, acceleration, and angular velocity values, such as those obtained during a tire pressure check according to the method of Figure 6, can be utilised by the processor 102 of the respective tire monitoring device 100, or by the remote computing device 504, to derive further useful parameters in a number of ways.

In some examples, the processor 102 of the tire monitoring device 100 receives acceleration data from the accelerometer 118, and angular velocity data from the gyroscope 120, and processes this data to determine whether the landing gear 400 is extended or retracted relative to the aircraft 302. The tire monitoring device 100 can thereby determine a position of the landing gear 400 independently, without connecting to any avionics systems of the aircraft 302.

The position of the landing gear 400 is stored in the first storage 114 alongside measured pressure, temperature, acceleration, and angular velocity values, and can be downloaded from the first storage 114 using the remote device 200 in a manner similar to that previously described for sensor data.

The processor 102 also utilises the position of the landing gear 400 to transition the tire monitoring device 100 between a reduced functionality mode and a normal operating mode. Where the landing gear 400 is determined to be extended, the processor 102 controls the tire monitoring device 100 to be in the normal operating mode, in which the tire monitoring device periodically monitors values and wakes to listen for the probe of the remote device 200.

Where the landing gear 400 is determined to be retracted, the processor 102 controls the tire monitoring device 100 to be in the reduced functionality mode. In the reduced functionality mode, a frequency at which measurements are made by the tire monitoring device 100 is reduced relative to the normal operating mode. Furthermore, when the landing gear 400 is retracted relative to the aircraft 302, e.g. when the aircraft 302 is in-flight, the tire monitoring device 100 would not normally expect to receive the probe from the remote device 200. As such, in the reduced functionality mode the processor 102 controls the tire monitoring device 100 such that the tire monitoring device 100 does not wake up periodically to listen for the probe of the remote device 200, and such that the wireless communication interface 104 is turned off. This may conserve the power supply 108, which may increase a maintenance free period of the tire monitoring device 100.

In some examples, the processor 102 of the tire monitoring device 100 receives acceleration data from the accelerometer 118, and angular velocity data from the gyroscope 120, and processes this data to determine a speed of the respective wheel of the landing gear 400. The speed in turn indicates whether the wheel is in motion or not. The tire monitoring device 100 can thereby determine wheel speed independently of other sensors of the aircraft 302, such as wheel tachometers. This may enable wheel speed to be determined in the event of wheel tachometers operating with reduced functionality, thus enabling retention of functionality such as anti-skid even where wheel tachometers operate with reduced functionality. Alternatively, such wheel tachometers may be omitted, resulting in reduced weight and/or cost for the aircraft 302.

The determined wheel speed is stored in the first storage 114 alongside measured pressure, temperature, acceleration, and angular velocity values, and can be downloaded from the first storage 114 using the remote device 200 in a manner similar to that previously described for sensor data.

The processor 102 can also utilise the determined wheel speed to control the tire monitoring device 100 by transitioning the tire monitoring device 100 between a reduced functionality mode and a normal operating mode.

Where the wheel speed is determined to be zero and the landing gear is determined to be extended, the processor 102 controls the tire monitoring device 100 to be in the normal operating mode, in which the tire monitoring device periodically monitors values and wakes to listen for the probe of the remote device 200.

Where the landing gear 400 is determined to be retracted and the wheel speed is determined to be zero, and when the wheel speed is determined the processor 102 controls the tire monitoring device 100 to be in the reduced functionality mode. In the reduced functionality mode, a frequency at which measurements are made by the tire monitoring device 100 is reduced relative to the normal operating mode. Furthermore, when the landing gear 400 is retracted relative to the aircraft 302, e.g. when the aircraft 302 is in-flight, or when the wheel speed is non-zero, e.g. when the aircraft is taking off, landing, or taxiing, the tire monitoring device 100 would not normally expect to receive the probe from the remote device 200. As such, in the reduced functionality mode the processor 102 controls the tire monitoring device 100 such that the tire monitoring device 100 does not wake up periodically to listen for the probe of the remote device 200, and such that the wireless communication interface 104 is turned off. This may conserve the power supply 108, which may increase a maintenance-free period of the tire monitoring device 100.

In some examples, the processor 102 of the tire monitoring device 100 receives acceleration data from the accelerometer 118, and angular velocity data from the gyroscope 120, and processes this data to determine whether the aircraft 302 is in flight. In particular, acceleration and/or angular velocity measurements can be indicative of vibrations experienced when the aircraft 302 lands. The tire monitoring device 100 can thereby determine whether the aircraft is in-flight or on-ground independently of other sensors of the aircraft 302, such as weight-on-wheels sensors. This may enable wheel speed to be determined in the event of weight-on-wheels sensors operating with reduced functionality, thus enabling retention of functionality dependent on such weight-on-wheels sensors even where such weight-on-wheels sensors operate with reduced functionality.

Whether the aircraft 302 is in flight or on-ground is stored in the first storage 114 alongside measured pressure, temperature, acceleration, and angular velocity values, and can be downloaded from the first storage 114 using the remote device 200 in a manner similar to that previously described for sensor data.

The processor 102 can also utilise the determination as to whether the aircraft is in-flight or on-ground to control the tire monitoring device 100 by transitioning the tire monitoring device 100 between a reduced functionality mode and a normal operating mode in a similar manner to that described above. The normal operating mode corresponds to a period in which the aircraft is determined to be on-ground, and the reduced functionality mode corresponds to a period in which the aircraft is determined to be in-flight.

As previously noted, the remote computing device 504 can process the measured pressure, temperature, acceleration, and angular velocity values, which are received in the manner previously described via the remote device 200. Other aircraft parameters, for example those received via onboard avionics systems, may also be utilised alongside values received via the remote device 200.

In some examples, the remote computing device 504 can process the measured acceleration, and angular velocity values, additionally or alternatively to the processing performed by the processor 102 of the tire monitoring device 100, to determine any of the position of the landing gear 400, wheel speed, and whether the aircraft 302 is in-flight or on-ground. Such data can be utilised, alongside the measured pressure, temperature, acceleration, and angular velocity, by the remote computing device 504 to determine altered operational modes of components of the landing gear 400, and may be utilised for predictive health maintenance.

In some examples, the remote computing device 504 determines altered operational modes of the respective first 406 and second 408 bearing assemblies based on obtained measured acceleration, and angular velocity values. The obtained acceleration and angular velocity values, alongside the corresponding timestamps provided by the time source 116 enable a vibration profile to de determined and/or displayed by the remote computing device. Such a vibration profile can be utilised, alongside data relating to a phase of flight of the aircraft 302, to determine an altered operational mode of the respective first 406 and second 408 bearing assemblies. Such an altered operational mode can be indicated by excessive or abnormal vibrations for a particular flight phase, and may be indicative of reduced performance characteristics and/or required maintenance actions for the respective first 406 and second 408 bearing assemblies.

In some examples, measured acceleration, and angular velocity values during a flight phase in which the respective first 410 or second 414 wheels are free to spin are utilised to determine an altered operational mode of the respective first 406 and second 408 bearing assemblies. Such a flight phase can comprise a period shortly after take-off of the aircraft 302, when the wheels 410, 414 are free to spin before retraction of the landing gear 400 and application of retraction braking. Given that no external force is applied to the first 410 or second 414 wheel during such a flight phase, such as no force applied by the first 418 or second 420 braking assemblies, vibrations determined from measured acceleration and angular velocity data can be taken to be related to the respective first 406 and second 408 bearing assemblies.

In some examples the remote computing device 504 itself determines the altered operational mode, whilst in other examples the remote computing device 504 can display, via the display device 508, data that enables an operator to determine the altered operational mode. Either way, determination of the altered operational mode can facilitate determination of an appropriate maintenance action to be taken. Such determination of an appropriate maintenance action to be taken can be performed by the remote computing device 504, or the operator of the remote computing device 504. Maintenance actions as discussed herein can comprise one or more of causing or scheduling a maintenance procedure to be performed, performing a maintenance procedure, and checking that a maintenance procedure has already been performed

In some examples, the remote computing device 504 determines altered operational modes of the respective first 418 and second 420 braking assemblies based on obtained measured acceleration, and angular velocity values. The obtained acceleration and angular velocity values, alongside the corresponding timestamps provided by the time source 126 enable a vibration profile to de determined and/or displayed by the remote computing device 504. Such a vibration profile can be utilised, alongside data relating to a phase of flight of the aircraft 302, to determine an altered operational mode of the respective first 418 and second 420 braking assemblies. Such an altered operational mode can be indicated by excessive or abnormal vibrations for a particular flight phase, and may be indicative of reduced performance characteristics and/or required maintenance actions for the respective first 418 and second 420 braking assemblies.

In some examples, measured acceleration, and angular velocity values during a flight phase in which the respective first 418 or second 420 braking assemblies apply a braking force to the first 410 and second 414 wheels are utilised to determine an altered operational mode of the respective first 418 and second 420 braking assemblies. Such a flight phase can comprise a period during retraction of the landing gear, e.g. during so-called retraction braking. Given that the braking force is applied to the first 410 or second 414 wheel during such a flight phase, vibrations determined from measured acceleration and angular velocity data can be taken to be related to the respective first 418 and second 420 braking assemblies.

In some examples the remote computing device 504 itself determines the altered operational mode, whilst in other examples the remote computing device 504 can display, via the display device 508, data that enables an operator to determine the altered operational mode. Either way, determination of the altered operational mode can facilitate determination of an appropriate maintenance action to be taken. Such determination of an appropriate maintenance action to be taken can be performed by the remote computing device 504, or the operator of the remote computing device 504.

In some examples, the remote computing device 504 determines altered operational modes of the respective first 410 and second 414 wheels based on obtained measured pressure, temperature, acceleration, and angular velocity values. The obtained acceleration and angular velocity values, alongside the corresponding timestamps provided by the time source 116 enable a vibration profile to de determined and/or displayed by the remote computing device 504. Such a vibration profile can be utilised, alongside data relating to a phase of flight of the aircraft 302, to determine an altered operational mode of the respective first 410 and second 414 wheels. Such an altered operational mode can be indicated by excessive or abnormal vibrations for a particular flight phase, and may be indicative of reduced performance characteristics and/or required maintenance actions for the respective first 410 and second 414 wheels.

Similarly, the obtained measured pressure, temperature, acceleration, and angular velocity values can be utilised to determine a speed or acceleration profile of the first 410 and second 414 wheels. Such a speed or acceleration profile can be compared to a corresponding profile expected during normal operation, and where the profile deviates from the normal profile, an altered operational mode of the respective first 410 or second 414 wheel is determined.

In some examples, measured acceleration, and angular velocity values during a flight phase in which the respective first 410 or second 414 wheels are free to spin are utilised to determine an altered operational mode of the respective first 410 and second 414 wheels. Such a flight phase can comprise a period shortly after take-off of the aircraft 302, when the wheels 410,414 are free to spin before retraction of the landing gear 400 and application of retraction braking. The combination of a speed or acceleration profile with a vibration profile during such a flight phase can be used to determine an altered operational mode of the first 410 or second 414 wheel.

Parameters such as measured acceleration and measured angular velocity obtained during other flight phases can be utilised to determine an altered operational mode of the first 410 or second 414 wheel. Parameters such as measured acceleration and measured angular velocity can be obtained during any of flight phases where wheel spin-up occurs, during landing of the aircraft 302, during touchdown of the aircraft 302, during retraction braking, and during taxiing.

An altered operational mode of the first 410 or second 414 wheel can result from number of factors. An imbalance between the first 410 and second 414 wheels, which share the same axle 404, e.g. which are so-called axle mates, can be considered an altered operational mode of the first 410 and second 414 wheels. Such an imbalance can result from any of a variation in tire mass, a variation in tire tread depth, and a variation in tire pressure and/or temperature.

In some examples the remote computing device 504 itself determines the altered operational mode of the first 410 and second 414 wheel, whilst in other examples the remote computing device 504 can display, via the display device 508, data that enables an operator to determine the altered operational mode. Either way, determination of the altered operational mode can facilitate determination of an appropriate maintenance action to be taken. Such determination of an appropriate maintenance action to be taken can be performed by the remote computing device 504, or the operator of the remote computing device 504.

In any of the aforementioned situations, data obtained by or derived from the tire monitoring device 100 can be stored in the remote memory 502, and can be subsequently used by the remote computing device 504 for historical analysis of operation of any of the aircraft 302, the landing gear 400, and the tire monitoring device 100.

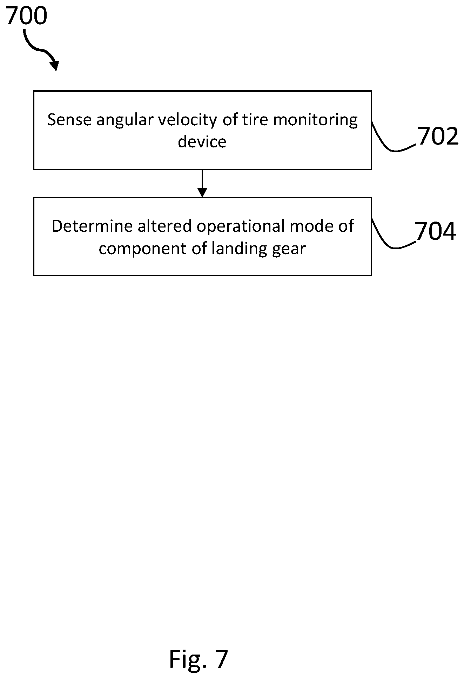

A method 700 according to the above is illustrated in Figure 7. The method 700 comprises sensing 702, at the tire monitoring device 100 mounted to the aircraft landing gear 400, an angular velocity of the tire monitoring device 100, and determining 704, based on the sensed angular velocity of the tire monitoring device 100, an altered operational mode of a component of the aircraft landing gear 400.

Use of the gyroscope 120 as part of the tire monitoring device 100, which has the wireless communication interface 104, may provide additional data regarding operation of any of the aircraft 302, the landing gear 400, and the tire monitoring device 100 compared to a tire monitoring device 100 absent a gyroscope, without needing to connect to relatively complex onboard avionics systems.

It is to noted that the term "or" as used herein is to be interpreted to mean "and/or", unless expressly stated otherwise.

## Claims

1. An aircraft landing gear (400) comprising a tire monitoring device (100) and a wheel (410) to which the tire monitoring device is mounted, wherein the tire monitoring device comprises:
a pressure sensor (110) for sensing an internal pressure of a tire (412) of the wheel;
an accelerometer (118) for sensing an acceleration of the tire monitoring device;
a gyroscope (120) for sensing an angular velocity of the tire monitoring device; and
a wireless communication interface (104) for wirelessly communicating a signal based on at least one of a sensed internal pressure sensed by the pressure sensor, a sensed acceleration sensed by the accelerometer, and a sensed angular velocity sensed by the gyroscope.

2. The aircraft landing gear according to Claim 1, wherein the tire monitoring device comprises a mounting mechanism (101) for mounting the tire monitoring device to the wheel such that a position of the tire pressure monitoring device is fixed relative to the wheel.

3. The aircraft landing gear according to Claim 1 or Claim 2, wherein the tire monitoring device comprises a memory (114, 116) for storing the at least one of the sensed internal pressure, the sensed acceleration, and the sensed angular velocity, optionally wherein the tire monitoring device is configured to store the at least one of the sensed internal pressure, the sensed acceleration, and the sensed angular velocity, alongside a corresponding timestamp in the memory.

4. The aircraft landing gear according to Claim 3, wherein the tire monitoring device is configured to transmit, in response to a request from a remote device (200) and via the wireless communication interface, a signal based on the at least one of the sensed internal pressure, the sensed acceleration, and the sensed angular velocity, to the remote device.

5. The aircraft landing gear according to any one of the preceding claims, wherein the tire monitoring device comprises a controller (102) configured to determine, based on at least one of the sensed acceleration by the accelerometer and the sensed angular velocity by the gyroscope, a position of the aircraft landing gear.

6. The aircraft landing gear according to any one of the preceding claims, wherein the controller is configured to control the tire monitoring device based on the determined position of the aircraft landing gear.

7. An aircraft landing gear according to any one of the preceding claims , wherein the tire monitoring device comprises a controller (102) configured to determine, based on the at least one of the sensed internal pressure, the sensed acceleration and the sensed angular velocity, a speed of the wheel to which the tire monitoring device is mounted, optionally wherein the controller is configured to control the tire monitoring device based on the determined speed of the wheel.

8. An aircraft (302) comprising an aircraft landing gear according to any one of the preceding claims.

9. An aircraft according to Claim 8, wherein the tire monitoring device comprises a controller (102) configured to determine, based on at the least one of the sensed internal pressure, the sensed acceleration and the sensed angular velocity, whether the aircraft is in-flight.

10. An aircraft according to Claim 9, wherein the controller is configured to control the tire monitoring device based on whether the aircraft is determined to be in-flight.

11. A tire monitoring system (500) comprising an aircraft according to any one of Claims 8 to 10, and a processing system (504) configured to obtain the at least one of the sensed internal pressure, the sensed acceleration, and the sensed angular velocity from the tire monitoring device.

12. A tire monitoring system according to Claim 11, wherein the processing system is configured to determine, based on the at least one of the sensed internal pressure, the sensed acceleration, and the sensed angular velocity, an altered operational mode of a component of the aircraft landing gear.

13. A tire monitoring system according to Claim 12, wherein the landing gear comprises an axle (404), and a bearing assembly (406), the wheel (410) is mounted to the axle by the bearing assembly, and the processing system is configured to determine, based on the at least one of the sensed internal pressure, the sensed acceleration, and the sensed angular velocity, an altered operational mode of the bearing assembly.

14. A tire monitoring system according to any one of Claims 12 to 13, wherein the aircraft landing gear comprises a brake assembly (418) for applying a braking force to the wheel, and the processing system is configured to determine, based on the at least one of the sensed internal pressure, the sensed acceleration, and the sensed angular velocity, an altered operational mode of the brake assembly.

15. A tire monitoring system according to any one of Claims 12 to 14, wherein the landing gear comprises an axle (404) and a further wheel (414), the wheel and the further wheel are mounted to the axle, and the processing system is configured to determine, based on the at least one of the sensed internal pressure, the sensed acceleration, and the sensed angular velocity, an altered operational mode of at least one of the wheel and the further wheel.

## Patentansprüche

1. Flugzeugfahrwerk (400), das eine Reifenüberwachungsvorrichtung (100) und ein Rad (410) umfasst, an dem die Reifenüberwachungsvorrichtung montiert ist, wobei die Reifenüberwachungsvorrichtung Folgendes umfasst:
ein Drucksensor (110) zum Erfassen eines Innendrucks eines Reifens (412) des Rades;
einen Beschleunigungsmesser (118) zum Erfassen einer Beschleunigung der Reifenüberwachungsvorrichtung;
ein Gyroskop (120) zum Erfassen einer Winkelgeschwindigkeit der Reifenüberwachungsvorrichtung; und
eine drahtlose Kommunikationsschnittstelle (104) zum drahtlosen Kommunizieren eines Signals basierend auf einem erfassten Innendruck, der durch den Drucksensor erfasst wird, einer erfassten Beschleunigung, die durch den Beschleunigungsmesser erfasst wird, und/oder einer erfassten Winkelgeschwindigkeit, die durch das Gyroskop erfasst wird.

2. Flugzeugfahrwerk nach Anspruch 1, wobei die Reifenüberwachungsvorrichtung einen Montagemechanismus (101) zum Montieren der Reifenüberwachungsvorrichtung an dem Rad umfasst, so dass eine Position der Reifendrucküberwachungsvorrichtung relativ zu dem Rad fixiert ist.

3. Flugzeugfahrwerk nach Anspruch 1 oder Anspruch 2, wobei die Reifenüberwachungsvorrichtung einen Speicher (114, 116) zum Speichern des erfassten Innendrucks und/oder der erfassten Beschleunigung und/oder der erfassten Winkelgeschwindigkeit umfasst, wobei die Reifenüberwachungsvorrichtung optional dazu ausgebildet ist, den erfassten Innendruck und/oder die erfasste Beschleunigung und/oder die erfasste Winkelgeschwindigkeit neben einem entsprechenden Zeitstempel in dem Speicher zu speichern.

4. Flugzeugfahrwerk nach Anspruch 3, wobei die Reifenüberwachungsvorrichtung dazu ausgebildet ist, als Reaktion auf eine Anforderung von einem Remote-Gerät (200) und über die drahtlose Kommunikationsschnittstelle ein Signal basierend auf dem erfassten Innendruck und/oder der erfassten Beschleunigung und/oder der erfassten Winkelgeschwindigkeit an das Remote-Gerät zu übertragen.

5. Flugzeugfahrwerk nach einem der vorhergehenden Ansprüche, wobei die Reifenüberwachungsvorrichtung eine Steuereinheit (102) umfasst, die dazu ausgebildet ist, basierend auf der erfassten Beschleunigung durch den Beschleunigungsmesser und/oder der erfassten Winkelgeschwindigkeit durch das Gyroskop eine Position des Flugzeugfahrwerks zu bestimmen.

6. Flugzeugfahrwerk nach einem der vorhergehenden Ansprüche, wobei die Steuereinheit dazu ausgebildet ist, die Reifenüberwachungsvorrichtung basierend auf der bestimmten Position des Flugzeugfahrwerks zu steuern.

7. Flugzeugfahrwerk nach einem der vorhergehenden Ansprüche, wobei die Reifenüberwachungsvorrichtung eine Steuereinheit (102) umfasst, die dazu ausgebildet ist, basierend auf dem erfassten Innendruck und/oder der erfassten Beschleunigung und/oder der erfassten Winkelgeschwindigkeit eine Geschwindigkeit des Rades zu bestimmen, an dem die Reifenüberwachungsvorrichtung montiert ist, wobei die Steuereinheit optional dazu ausgebildet ist, die Reifenüberwachungsvorrichtung basierend auf der bestimmten Geschwindigkeit des Rades zu steuern.

8. Flugzeug (302), das ein Flugzeugfahrwerk gemäß einem der vorhergehenden Ansprüche umfasst.

9. Flugzeug nach Anspruch 8, wobei die Reifenüberwachungsvorrichtung eine Steuereinheit (102) umfasst, die dazu ausgebildet ist, basierend auf dem erfassten Innendruck und/oder der erfassten Beschleunigung und/oder der erfassten Winkelgeschwindigkeit zu bestimmen, ob sich das Flugzeug im Flug befindet.

10. Flugzeug nach Anspruch 9, wobei die Steuereinheit dazu ausgebildet ist, die Reifenüberwachungsvorrichtung basierend darauf zu steuern, ob bestimmt wird, dass das Flugzeug im Flug ist.

11. Reifenüberwachungssystem (500), das ein Flugzeug nach einem der Ansprüche 8 bis 10 und ein Verarbeitungssystem (504) umfasst, das dazu ausgebildet ist, den erfassten Innendruck und/oder die erfasste Beschleunigung und/oder die erfasste Winkelgeschwindigkeit von der Reifenüberwachungsvorrichtung zu erhalten.

12. Reifenüberwachungssystem nach Anspruch 11, wobei das Verarbeitungssystem dazu ausgebildet ist, basierend auf dem erfassten Innendruck und/oder der erfassten Beschleunigung und/oder der erfassten Winkelgeschwindigkeit einen geänderten Betriebsmodus einer Komponente des Flugzeugfahrwerks zu bestimmen.

13. Reifenüberwachungssystem nach Anspruch 12, wobei das Fahrwerk eine Achse (404) und eine Lageranordnung (406) umfasst, das Rad (410) durch die Lageranordnung an der Achse montiert ist und das Verarbeitungssystem dazu ausgebildet ist, basierend auf dem erfassten Innendruck und/oder der erfassten Beschleunigung und/oder der erfassten Winkelgeschwindigkeit einen geänderten Betriebsmodus der Lageranordnung zu bestimmen.

14. Reifenüberwachungssystem nach einem der Ansprüche 12 bis 13, wobei das Flugzeugfahrwerk eine Bremsanordnung (418) zum Anwenden einer Bremskraft auf das Rad umfasst und das Verarbeitungssystem dazu ausgebildet ist, basierend auf dem erfassten Innendruck und/oder der erfassten Beschleunigung und/oder der erfassten Winkelgeschwindigkeit einen geänderten Betriebsmodus der Bremsanordnung zu bestimmen.

15. Reifenüberwachungssystem nach einem der Ansprüche 12 bis 14, wobei das Fahrwerk eine Achse (404) und ein weiteres Rad (414) umfasst, das Rad und das weitere Rad an der Achse montiert sind und das Verarbeitungssystem dazu ausgebildet ist, basierend auf dem erfassten Innendruck und/oder der erfassten Beschleunigung und/oder der erfassten Winkelgeschwindigkeit einen geänderten Betriebsmodus des Rades und/oder des weiteren Rades zu bestimmen.

## Revendications

1. Train d'atterrissage d'aéronef (400) comprenant un dispositif de surveillance de pneu (100) et une roue (410) sur laquelle le dispositif de surveillance de pneu est monté, dans lequel le dispositif de surveillance de pneu comprend :
un capteur de pression (110) destiné à détecter une pression interne d'un pneu (412) de la roue ;
un accéléromètre (118) destiné à détecter une accélération du dispositif de surveillance de pneu ;
un gyroscope (120) destiné à détecter une vélocité angulaire du dispositif de surveillance de pneu ; et
une interface de communication sans fil (104) destinée à communiquer sans fil un signal sur la base d'au moins une parmi une pression interne détectée, détectée par le capteur de pression, une accélération détectée, détectée par l'accéléromètre, et une vélocité angulaire détectée, détectée par le gyroscope.

2. Train d'atterrissage d'aéronef selon la revendication 1, dans lequel le dispositif de surveillance de pneu comprend un mécanisme de montage (101) destiné à monter le dispositif de surveillance de pneu sur la roue de manière telle qu'une position du dispositif de surveillance de pression de pneu est fixe relativement à la roue.

3. Train d'atterrissage d'aéronef selon la revendication 1 ou la revendication 2, dans lequel le dispositif de surveillance de pneu comprend une mémoire (114, 116) destinée à stocker l'au moins une parmi la pression interne détectée, l'accélération détectée, et la vélocité angulaire détectée, facultativement dans lequel le dispositif de surveillance de pneu est configuré pour stocker l'au moins une parmi la pression interne détectée, l'accélération détectée, et la vélocité angulaire détectée, en même temps qu'une estampille temporelle correspondante dans la mémoire.

4. Train d'atterrissage d'aéronef selon la revendication 3, dans lequel le dispositif de surveillance de pneu est configuré pour transmettre, en réponse à une demande provenant d'un dispositif à distance (200) et par l'intermédiaire de l'interface de communication sans fil, un signal sur la base de l'au moins une parmi la pression interne détectée, l'accélération détectée, et la vélocité angulaire détectée, au dispositif à distance.

5. Train d'atterrissage d'aéronef selon l'une quelconque des revendications précédentes, dans lequel le dispositif de surveillance de pneu comprend une unité de commande (102) configurée pour déterminer, sur la base d'au moins une parmi l'accélération détectée par l'accéléromètre et la vélocité angulaire détectée par le gyroscope, une position du train d'atterrissage d'aéronef.

6. Train d'atterrissage d'aéronef selon l'une quelconque des revendications précédentes, dans lequel l'unité de commande est configurée pour commander le dispositif de surveillance de pneu sur la base de la position déterminée du train d'atterrissage d'aéronef.

7. Train d'atterrissage d'aéronef selon l'une quelconque des revendications précédentes, dans lequel le dispositif de surveillance de pneu comprend une unité de commande (102) configurée pour déterminer, sur la base de l'au moins une parmi la pression interne détectée, l'accélération détectée, et la vélocité angulaire détectée, une vitesse de la roue sur laquelle le dispositif de surveillance de pneu est monté, facultativement dans lequel l'unité de commande est configurée pour commander le dispositif de surveillance de pneu sur la base de la vitesse déterminée de la roue.

8. Aéronef (302), comprenant un train d'atterrissage d'aéronef selon l'une quelconque des revendications précédentes.

9. Aéronef selon la revendication 8, dans lequel le dispositif de surveillance de pneu comprend une unité de commande (102) configurée pour déterminer, sur la base de l'au moins une parmi la pression interne détectée, l'accélération détectée, et la vélocité angulaire détectée, le fait que l'aéronef est, ou n'est pas, en vol.

10. Aéronef selon la revendication 9, dans lequel l'unité de commande est configurée pour commander le dispositif de surveillance de pneu sur la base du fait que l'aéronef est, ou n'est pas, déterminé être en vol.

11. Système de surveillance de pneu (500) comprenant un aéronef selon l'une quelconque des revendications 8 à 10, et un système de traitement (504) configuré pour obtenir, du dispositif de surveillance de pneu, l'au moins une parmi la pression interne détectée, l'accélération détectée, et la vélocité angulaire détectée.

12. Système de surveillance de pneu selon la revendication 11, dans lequel le système de traitement est configuré pour déterminer, sur la base de l'au moins une parmi la pression interne détectée, l'accélération détectée, et la vélocité angulaire détectée, un mode de fonctionnement altéré d'un composant du train d'atterrissage d'aéronef.

13. Système de surveillance de pneu selon la revendication 12, dans lequel le train d'atterrissage comprend un essieu (404), et un ensemble palier (406), la roue (410) est montée sur l'essieu par le biais de l'ensemble palier, et le système de traitement est configuré pour déterminer, sur la base de l'au moins une parmi la pression interne détectée, l'accélération détectée, et la vélocité angulaire détectée, un mode de fonctionnement altéré de l'ensemble palier.

14. Système de surveillance de pneu selon l'une quelconque des revendications 12 et 13, dans lequel le train d'atterrissage d'aéronef comprend un ensemble frein (418) pour appliquer une force de freinage sur la roue, et le système de traitement est configuré pour déterminer, sur la base de l'au moins une parmi la pression interne détectée, l'accélération détectée, et la vélocité angulaire détectée, un mode de fonctionnement altéré de l'ensemble frein.

15. Système de surveillance de pneu selon l'une quelconque des revendications 12 à 14, dans lequel le train d'atterrissage comprend un essieu (404) et une roue supplémentaire (414), la roue et la roue supplémentaire sont montées sur l'essieu, et le système de traitement est configuré pour déterminer, sur la base de l'au moins une parmi la pression interne détectée, l'accélération détectée, et la vélocité angulaire détectée, un mode de fonctionnement altéré d'au moins une parmi la roue et la roue supplémentaire.
